# EUROPÄISCHE PATENTANMELDUNG

(11) **EP 2 218 922 A1**
(43) Veröffentlichungstag der Anmeldung: **18.08.2010**
(21) Anmeldenummer: 10405020.8
(22) Anmeldetag: 04.02.2010
(51) Int. Cl.: F16B 13/08, F16B 13/12, F16B 13/06

(54) **Spreizhülse sowie Einschlaganker**

(30) Priorität: 05.02.2009 CH 1632009
(71) Anmelder: MUNGO BEFESTIGUNGSTECHNIK AG, 4603 Olten (CH)
(72) Erfinder: Potthoff, Michael, 4612 Wangen b. Olten (CH)
(74) Vertreter: Wagner, Wolfgang Heribert

(57) **Zusammenfassung**

Eine Spreizhülse (1) weist einen zylindrischen Führungsabschnitt (5) und einen gegen ein Vorderende (2) hin anschliessenden ebenfalls zylindrischen Verankerungsabschnitt (6) auf, dessen Durchmesser zwischen 93% und 98% des Durchmessers des Führungsabschnitts (5) und dessen Länge zwischen 20% und 50% der Gesamtlänge der Spreizhülse (1) beträgt. Dadurch ist das Einschlagen eines Spreizstiftes (11), der in einem Kanal (4) der Spreizhülse (1) mit einem sich gegen das Vorderende (2) konisch verengenden Spreizabschnitt (9) angeordnet ist, wesentlich erleichtert.

## Beschreibung

### Technisches Gebiet

Die Erfindung betrifft eine Spreizhülse für einen Einschlaganker sowie einen Einschlaganker mit einer erfindungsgemässen Spreizhülse. Einschlaganker dienen zur Verankerung von Bolzen u.dgl. in einem harten Baustoff, wo die Spreizhülse in ein Bohrloch eingeführt und durch Einschlagen eines Spreizstiftes in demselben verspreizt wird.

### Stand der Technik

Ein Einschlaganker mit einer gattungsgemässen Spreizhülse, welche über ihre ganze Länge gleichbleibenden Durchmesser aufweist, wird von der Mungo Befestigungstechnik AG unter der Bezeichnung ESA vertrieben. Bei diesem Einschlaganker erfordert das Einschlagen des Spreizstiftes in die Einschlaghülse mittels eines stiftartigen Einschlagwerkzeugs eine grössere Zahl von Hammerschlägen - meist sieben oder acht -, bis der Spreizstift vollständig eingeschlagen und die Spreizhülse zuverlässig im Bohrloch verspreizt ist.

Aus DE 41 14 375 A1 ist ein Einschlaganker bekannt, bei dem das Einschlagen des Spreizstiftes durch eine besondere Ausbildung desselben mit einem an sein vorderes Ende anschliessenden Zapfen geringeren Durchmessers erleichtert ist.

### Darstellung der Erfindung

Der Erfindung liegt die Aufgabe zu Grunde, eine gattungsgemässe Spreizhülse anzugeben, bei der das Einschlagen des Spreizstiftes erleichtert ist. Diese Aufgabe wird durch die Merkmale im Kennzeichen des Anspruchs 1 gelöst. Es hat sich gezeigt, dass sich bei erfindungsgemässer Ausbildung der Spreizhülse die Zahl der zum Verspreizen der Spreizhülse erforderlichen Hammerschläge auf zwei bis drei vermindert. Das Setzen des Einschlagankers ist dadurch erleichtert und der Zeitbedarf dafür wesentlich geringer.

Erfindungsgemäss wird auch ein die gleichen Vorteile aufweisender Einschlaganker angegeben, welcher ausser der Spreizhülse einen geeigneten Spreizstift umfasst.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: einen Längsschnitt durch eine erfindungsgemässe Spreizhülse entsprechend I-I in Fig. 2,
- Fig. 2: eine Vorderansicht der Spreizhülse von Fig. 1 und
- Fig. 3: einen Längsschnitt durch eine erfindungsgemässe Spreizhülse entsprechend Fig. 1, wobei die Spreizhülse durch einen Spreizstift zu einem erfindungsgemässen Einschlaganker vervollständigt ist.

### Wege zur Ausführung der Erfindung

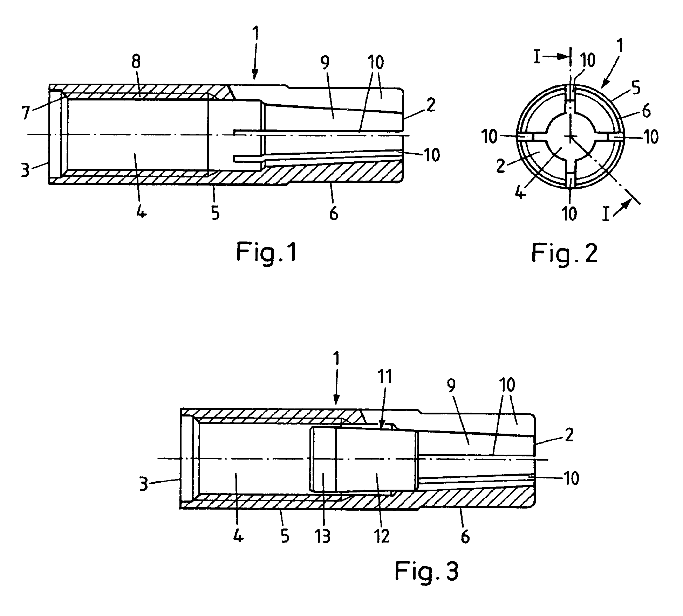

Eine Spreizhülse 1 aus Stahl ist (Fig. 1, 2) rohrartig ausgebildet mit einem von einem Vorderende 2 zu einem Hinterende 3 durchgehenden zentralen Kanal 4. Sie weist einen vom Hinterende 3 ausgehenden zylindrischen Führungsabschnitt 5 auf, an welchen über eine um 45° nach hinten geneigte Stufe ein Verankerungsabschnitt 6 anschliesst. Der Verankerungsabschnitt 6 ist ebenfalls zylindrisch ausgebildet, doch ist der Durchmesser der Spreizhülse 1 am Verankerungsabschnitt 6 etwas kleiner als am Führungsabschnitt 5. Er beträgt etwa 95% des Durchmessers am Führungsabschnitt 5. Er kann aber auch davon abweichen. Vorzugsweise liegt der Durchmesser am Verankerungsabschnitt 6 zwischen 93% und 98% des Durchmessers am Führungsabschnitt 5. Die Länge des Verankerungsabschnittes 6 beträgt etwa 35% der Gesamtlänge der Spreizhülse 1. Auch hier sind Abweichungen möglich. Vorzugsweise beträgt der Anteil der Länge des Verankerungsabschnittes 6 zwischen 20% und 50% der Länge der Spreizhülse 1.

Der Kanal 4 verengt sich unmittelbar anschliessend an das Hinterende 3 etwas und bildet dadurch einen Absatz 7, an den ein mit einem Gewinde 8 versehener Abschnitt konstanter lichter Weite anschliesst, der sich etwas über das Ende des Gewindes 8 hinaus gegen das Vorderende 2 erstreckt. Am Ende des besagten Abschnittes geht der Kanal 4 über eine umlaufende, etwas nach hinten geneigte Stufe in einen engeren Spreizabschnitt 9 über, der, etwas länger als der Verankerungsabschnitt 6, bis zum Vorderende 2 durchgeht und sich über seine ganze Länge stetig verengt. Vorzugsweise ist der Spreizabschnitt 9 konisch ausgebildet. Vom Vorderende 2 gehen vier gleichmässig über den Umfang der Spreizhülse 1 verteilte radiale Längsschlitze 10 aus, welche sich über den ganzen Spreizabschnitt 9 erstrecken und etwas über denselben hinaus gegen das Hinterende 3.

Ein Einschlaganker (Fig. 3) weist zusätzlich zur Spreizhülse 1 einen in den Kanal 4 eingesetzten Spreizstift 11, ebenfalls aus Stahl, auf, mit einem konischen Abschnitt 12, der, von einem vorderen Ende des Spreizstiftes 11 ausgehend, sich nach hinten geringfügig erweitert. Der Oeffnungswinkel zwischen der Achse und einer Mantellinie des Konus beträgt 3,18°. Auch hier sind Abweichungen möglich. Vorzugsweise liegt der besagte Winkel zwischen 3° und 3,5°. Der Oeffnungswinkel des Spreizabschnittes 9 der Spreizhülse 1 liegt etwa im gleichen Bereich. An den konischen Abschnitt 12 schliesst ein zylindrischer Abschnitt 13 an, dessen Durchmesser geringfügig kleiner ist als die lichte Weite des Kanals 4 im Bereich des Gewindes 8. An seinem vorderen Ende liegt der Durchmesser des Spreizstiftes 11 zwischen dem maximalen Wert der lichten Weite des Kanals 4 im Bereich des Spreizabschnittes 9, d.h. am hinteren Ende des Spreizabschnittes 9 und dem minimalen Wert derselben, d.h. am Vorderende 2 der Spreizhülse 1, derart, dass der konische Abschnitt 12 des Spreizstiftes 11 in einer Grundstellung (s. Fig. 3) etwas in den Spreizabschnitt 9 hineinragt, während der zylindrische Abschnitt 13 mit dem Gewinde 8 überlappt, von dem er knapp umgeben ist.

Die Spreizhülse 1 wird im Gebrauch in ein Bohrloch in einem harten Baustoff wie Beton oder Mörtel eingesetzt, das so dimensioniert ist, dass die Spreizhülse zwar ohne Schwierigkeiten ins Bohrloch gestossen werden kann, bis das Vorderende 2 ans Ende desselben anstösst, aber der Führungsabschnitt 5 im wesentlichen spielfrei im Bohrloch sitzt. Zum Verspreizen der Spreizhülse 1 wird dann ein stiftartiges Einschlagwerkzeug in den Kanal 4 eingeführt und bis zum Spreizstift 11 vorgeschoben. Anschliessend wird mit einem Hammer mehrmals auf das hintere Ende des Einschlagwerkzeugs geschlagen und dadurch der Spreizstift 11 weiter in den Spreizabschnitt 9 getrieben, bis das Einschlagwerkzeug an den vom Absatz 7 gebildeten Anschlag stösst. Die durch die Längsschlitze 10 getrennten Sektoren der Spreizhülse 1 werden dadurch nach aussen gegen die Wand des Bohrlochs getrieben und die Spreizhülse 1 im Bohrloch verspreizt und festgelegt. Anschliessend kann etwa ein mit dem Gewinde 8 eingreifender Gewindebolzen in den Kanal 4 eingedreht werden, der zur Befestigung weiterer Elemente dienen kann.

Durch den geringeren Durchmesser des Verankerungsabschnittes 6 ist das Einschlagen des Spreizstiftes 11 wesentlich erleichtert und erfordert in der Regel höchstens halb so viele Hammerschläge auf das Einschlagwerkzeug. Bei geeigneter Ausbildung von Spreizhülse 1 und Spreizstift 11 wie beschrieben ist die Spreizkraft trotzdem ausreichend, sodass hinsichtlich der Belastbarkeit des Einschlagankers keine Abstriche gemacht werden müssen.

Es sind verschiedene Abweichungen vom oben beschriebenen Beispiel möglich, ohne dass die erfindungsgemässe Wirkung wesentlich beeinträchtigt würde. Insbesondere kann der Verankerungsabschnitt auch anders als zylindrisch, etwa leicht konisch ausgebildet sein, der Spreizabschnitt kann sich auch in anderer Weise verengen als beschrieben, d.h. von einer konischen Form abweichen, die Spreizhülse kann am Hinterende einen nach aussen abstehenden Kragen aufweisen usw..

### Bezugszeichenliste

- 1: Spreizhülse
- 2: Vorderende
- 3: Hinterende
- 4: Kanal
- 5: Führungsabschnitt
- 6: Verankerungsabschnitt
- 7: Absatz
- 8: Gewinde
- 9: Spreizabschnitt
- 10: Längsschlitz
- 11: Spreizstift
- 12: konischer Abschnitt
- 13: zylindrischer Abschnitt

## Patentansprüche

1. Spreizhülse (1) für einen Einschlaganker, welche rohrartig ausgebildet ist mit einem in einer Längsrichtung von einem Vorderende (2) zu einem Hinterende (3) durchgehenden zentralen Kanal (4) mit einem an das Vorderende (2) anschliessenden Spreizabschnitt (9), der sich gegen dasselbe zu stetig verengt sowie mit mehreren über ihren Umfang verteilten, vom Vorderende (2) ausgehenden und sich jeweils mindestens über den Spreizabschnitt (9) erstreckenden Längsschlitzen (10) und welche einen an das Hinterende (3) anschliessenden zylindrischen Führungsabschnitt (5) umfasst, **dadurch gekennzeichnet, dass** sie einen an den Führungsabschnitt (5) anschliessenden, sich bis zum Vorderende (2) erstreckenden Verankerungsabschnitt (6) aufweist, an welchem der Durchmesser der Spreizhülse (1) kleiner ist als am Führungsabschnitt (5).

2. Spreizhülse nach Anspruch 1, **dadurch gekennzeichnet, dass** der Durchmesser der Spreizhülse (1) am Verankerungsabschnitt (6) mindestens im Bereich des Vorderendes (2) zwischen 98% und 93% ihres Durchmessers am Führungsabschnitt (5) beträgt.

3. Spreizhülse nach Anspruch 1 oder 2, **dadurch gekennzeichnet, dass** der Verankerungsabschnitt (6) ebenfalls zylindrisch ausgebildet ist, sodass die Spreizhülse (1) am Uebergang zwischen dem Führungsabschnitt (5) und dem Verankerungsabschnitt (6) an ihrer Aussenseite eine umlaufende Stufe aufweist.

4. Spreizhülse nach einem der Ansprüche 1 bis 3, **dadurch gekennzeichnet, dass** die Länge des Verankerungsabschnitts (6) zwischen 20% und 50% der Gesamtlänge der Spreizhülse (1) beträgt.

5. Spreizhülse nach einem der Ansprüche 1 bis 4, **dadurch gekennzeichnet, dass** die Längsschlitze (10) gegen das Hinterende (3) zu über den Spreizabschnitt (9) hinausgehen.

6. Spreizhülse nach einem der Ansprüche 1 bis 5, **dadurch gekennzeichnet, dass** sich die Längsschlitze (10) mindestens über den Verankerungsabschnitt (6) erstrecken.

7. Einschlaganker mit einer Spreizhülse (1) nach einem der Ansprüche 1 bis 6, **dadurch gekennzeichnet, dass** er ausserdem einen Spreizstift (11) umfasst, welcher im Kanal (4) angeordnet ist und mindestens im Bereich eines vorderen Endes einen Durchmesser aufweist, welcher grösser ist als die lichte Weite des Kanals (4) am Vorderende (2) der Spreizhülse (1) .

8. Einschlaganker nach Anspruch 7, **dadurch gekennzeichnet, dass** der Durchmesser des Spreizstiftes (11) im Bereich seines vorderen Endes zwischen der maximalen und der minimalen lichten Weite des Kanals (4) im Bereich des Spreizabschnitts (9) liegt.

9. Einschlaganker nach Anspruch 7 oder 8, **dadurch gekennzeichnet, dass** der Spreizstift (11) einen an sein vorderes Ende anschliessenden konischen Abschnitt (12) aufweist.

10. Einschlaganker nach Anspruch 9, **dadurch gekennzeichnet, dass** am konischen Abschnitt (12) die Mantellinien einen Oeffnungswinkel von zwischen 3° und 3,5° mit der Achse einschliessen.

11. Einschlaganker nach Anspruch 9 oder 10, **dadurch gekennzeichnet, dass** der Spreizstift (11) einen an den konischen Abschnitt (12) anschliessenden zylindrischen Abschnitt (13) aufweist.
